# FASCICULE DE BREVET EUROPEEN

(11) **EP 1 252 439 B1**
(45) Date de publication et mention de la délivrance du brevet: **13.04.2005**
(21) Numéro de dépôt: 01983652.7
(22) Date de dépôt: 30.10.2001
(51) Int. Cl.: F02N 15/02, F02N 15/06

(54) **PROCEDE DE FABRICATION D'UN DEMARREUR DE VEHICULE AUTOMOBILE COMPRENANT UN NOMBRE REDUIT DE PIECES**
HERSTELLUNGSVERFAHREN EINES ANLASSERS FÜR KRAFTFAHRZEUG MIT REDUZIERTER ANZAHL VON BAUTEILEN
METHOD FOR MAKING A MOTOR VEHICLE STARTER COMPRISING A REDUCED NUMBER OF PARTS

(30) Priorité: 31.10.2000 FR 0013979
(43) Date de publication de la demande: 30.10.2002
(73) Titulaire: VALEO EQUIPEMENTS ELECTRIQUES MOTEUR, 94017 Creteil (FR)
(72) Inventeur: GRAND, Laurent-Yves, F-69007 Lyon (FR)
(74) Mandataire: Gamonal, Didier
(86) Numéro de dépôt international: PCT/FR2001/003365
(87) Numéro de publication internationale: WO 2002/036962

(56) Documents cités:
- DE-A- 4 302 619
- FR-A- 2 409 392
- PATENT ABSTRACTS OF JAPAN vol. 008, no. 267 (M-343), 7 décembre 1984 (1984-12-07) & JP 59 138770 A (HITACHI SEISAKUSHO KK), 9 août 1984 (1984-08-09)

## Description

L'invention concerne les procédés de fabrication de démarreurs de véhicules automobiles.

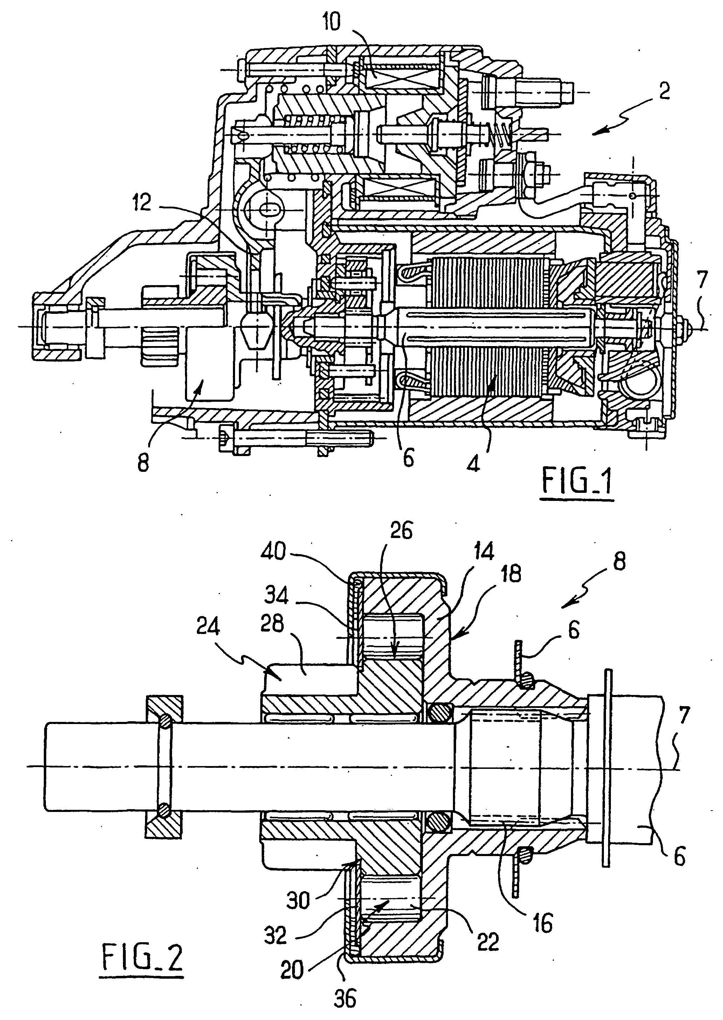

On a illustré en coupe à la figure 1 un démarreur d'un type connu. Le démarreur 2 comporte un moteur électrique 4 comprenant un arbre 6 sur lequel est monté un lanceur 8. Le démarreur comporte également un contacteur 10, agencé pour actionner un levier 12.

Le lanceur 8 est illustré plus en détails à la figure 2. Il comporte un boîtier 14 en prise par une partie tubulaire avec des cannelures 16 ménagées sur l'arbre 6. Ces cannelures sont généralement du type hélicoïdal et permettent la liaison du lanceur sur l'arbre en rotation tout en laissant possible un mouvement de translation en vue de l'engagement du lanceur avec la couronne de démarrage du moteur thermique, de façon connue en soi. Le levier 12 s'étend entre une face 18 du boîtier orientée vers le moteur électrique 4 et une butée rapportée 6. Cette face et la butée forment une gorge dans laquelle est logée l'extrémité du levier 12. Le lanceur comprend par ailleurs une roue libre 20 comprenant des galets cylindriques 22 ainsi que des ressorts. Le lanceur comporte un pignon 24 présentant une piste cylindrique 26 servant de chemin de roulement aux galets. Le pignon présente également une denture 26 destinée à transmettre au moteur thermique le mouvement de rotation provenant du moteur électrique.

Entre la denture 28 et la piste 26, le pignon présente une gorge 30 recevant deux demi rondelles 32, 34 dont le rôle est double. En premier lieu, ces rondelles ont pour fonction de fermer le compartiment du lanceur recevant les composants de la roue libre. En second lieu, elles ont pour fonction d'immobiliser le pignon en translation par rapport au boîtier, tout en le laissant libre en rotation par rapport au boîtier. Plus précisément les rondelles immobilisent le pignon dans le sens de l'extraction du boîtier. Dans l'autre sens, le pignon est immobilisé par le fond du boîtier 14 présentant à sa périphérie externe un rebord annulaire d'orientation axiale. Pour ce faire, le pignon est doté d'un épaulement transversal, le plus souvent formé à la faveur d'une gorge pour venir en appui sur la face arrière des rondelles 32, 34. A cette fin, les deux demi rondelles sont immobilisées sur leur diamètre extérieur contre la face avant du rebord du boîtier au moyen d'un capot de fermeture 36 fixé sur le boîtier. Les demi rondelles sont en acier dur de façon à résister à l'usure générée par leur frottement contre les faces de la gorge et de la roue libre. La fixation du capot 36 sur le boîtier est généralement faite par sertissage du capot sur la partie arrière du boîtier. Par ailleurs, pour avoir une bonne étanchéité nécessaire à la conservation de la graisse de la roue libre, le lanceur comporte un joint 40 de forme torique et de section approximativement rectangulaire interposé entre le boîtier, les demi rondelles et le capot.

L'assemblage d'un tel lanceur nécessite plusieurs pièces différentes : le capot, les deux demi-rondelles, le boîtier, et le joint. Le nombre de stocks de pièces à gérer sur la chaîne de montage est donc relativement important. De plus, la fabrication requiert un grand nombre d'étapes d'assemblage. Il en résulte que le prix de revient du démarreur est élevé. Pour réduire ce nombre de pièces, certaines solutions ont été proposées.

L'une d'elles consiste à réaliser les deux rondelles sous la forme d'une seule pièce comme décrit dans le document DE A 43 02 619. Dans ce document la piste du pignon a un diamètre supérieur au plus grand diamètre de la denture du pignon.

De même, le joint peut être supprimé en emmanchant à force le capot sur le diamètre extérieur du boîtier. Le maintien du capot et son étanchéité peuvent être renforcés en ménageant une ou plusieurs gorges circulaires de faible profondeur à la périphérie du boîtier, le métal du capot étant localement refoulé dans ces gorges.

Cependant, malgré ces progrès, le nombre de pièces nécessaires à la réalisation du lanceur demeure relativement élevé. De plus, dans le document DE A 43 02 619 le capot doit passer par dessus la denture du pignon. Il s'ensuit que le diamètre intérieur de l'ouverture du capot limite le dimensionnement du pignon. Ainsi, pour certaines applications nécessitant un grand nombre de dents sur le pignon, donc un diamètre de pignon élevé, il faut accroître le dimensionnement global du lanceur et, par retour, celui du démarreur.

Un but de l'invention est de fournir un procédé de fabrication de démarreur permettant de réduire le prix de revient du démarreur et de réduire le dimensionnement axial du lanceur, tout en ayant une denture de pignon de la taille désirée.

A cet effet, on prévoit selon l'invention un procédé de fabrication d'un démarreur pour véhicule comprenant les étapes consistant à :
- fournir un pignon de lanceur présentant un flanc et une piste pour le roulement de galets;
- fournir un capot de lanceur présentant à sa périphérie interne une portion axialement saillante délimitant une ouverture ayant un diamètre supérieur à un plus grand diamètre de la piste ;
- engager le capot sur la piste du pignon et déformer la portion saillante du capot pour réduire le diamètre de son ouverture de sorte que le flanc s'étend entre l'ouverture et la piste et bloque le capot en direction de la piste ; et
- fixer le capot à un boîtier de lanceur de sorte qu'il recouvre le boîtier en périphérie au moins partiellement.

Ainsi, le capot s'étend depuis le flanc du pignon jusqu'en périphérie du boîtier et ferme le boîtier. Il est donc possible de se dispenser des rondelles, ainsi que du joint d'étanchéité. On réduit donc le nombre de pièces nécessaires à la réalisation du lanceur. Dans le démarreur de l'invention, le capot remplit à lui seul plusieurs fonctions, à savoir bloquer le pignon à translation par rapport au boîtier tout en autorisant sa rotation, assurer l'étanchéité de l'intérieur de la roue libre, et participer à l'assemblage de la roue libre. En outre la denture du pignon peut avoir la taille souhaitée.

Le procédé selon l'invention pourra présenter en outre au moins l'une des caractéristiques suivantes :
durant l'étape d'engagement, on déforme la portion saillante du capot pour réduire le diamètre de son ouverture ;
on fournit le capot de sorte qu'il comprend une paroi de forme tronconique définissant l'ouverture ;
   - le capot présentant une paroi définissant l'ouverture, on traite cette paroi pour augmenter sa dureté ;
   - le capot présentant une paroi définissant l'ouverture, on rapporte sur cette paroi une couche d'un matériau protecteur ;
   - on emmanche le boîtier dans une collerette du capot ;
   - la collerette présente un tronçon d'extrémité de diamètre supérieur à un diamètre d'un autre tronçon de la collerette contigu au tronçon d'extrémité.

Grâce au procédé selon l'invention on obtient un démarreur pour véhicule comportant un lanceur comprenant un pignon présentant un flanc et une piste pour le roulement de galets, un boîtier, et un capot présentant une ouverture et recouvrant au moins partiellement le boîtier en périphérie, dans lequel le flanc s'étend entre l'ouverture et la piste et bloque le capot en direction de la piste.

Le démarreur obtenu par le procédé selon l'invention pourra en outre présenter au moins l'une des caractéristiques suivantes :
- le pignon comprend une denture et l'ouverture est apte à bloquer le capot à translation en direction de la denture ;
- le capot est contigu à une face du boîtier orientée vers la denture ;
- le lanceur comprenant des galets, le capot est contigu à une face des galets orientée vers la denture ;
- le lanceur est dépourvu de joint d'étanchéité entre le boîtier et le capot ; et
- le capot comprend une collerette entourant la périphérie du boîtier.

Grâce au procédé selon l'invention on obtient un lanceur de démarreur pour véhicule comportant un pignon présentant un flanc et une piste pour le roulement de galets, un boîtier, et un capot présentant une ouverture et recouvrant au moins partiellement le boîtier en périphérie, dans lequel le flanc s'étend entre l'ouverture et la piste et bloque le capot en direction de la piste.

D'autres caractéristiques et avantages de l'invention apparaîtront encore dans la description qui va suivre d'un mode préféré de réalisation de l'invention donné à titre d'exemple non limitatif. Aux dessins annexés :
- la figure 1 est une vue en coupe d'un démarreur selon l'art antérieur ;
- la figure 2 est une vue en coupe axiale du lanceur du démarreur de la figure 1 ;
- la figure 3 est une vue en coupe axiale du pignon et du capot du lanceur du démarreur selon un mode préféré de réalisation de l'invention, le pignon et le capot étant illustrés dans une première étape du procédé de fabrication selon l'invention ;
- la figure 4 est une vue à plus grande échelle d'un détail D de la figure 3 ; et
- les figures 5 et 6 sont deux vues du pignon et du capot de la figure 3 durant des deuxième et troisième étapes du procédé de fabrication du démarreur selon l'invention.

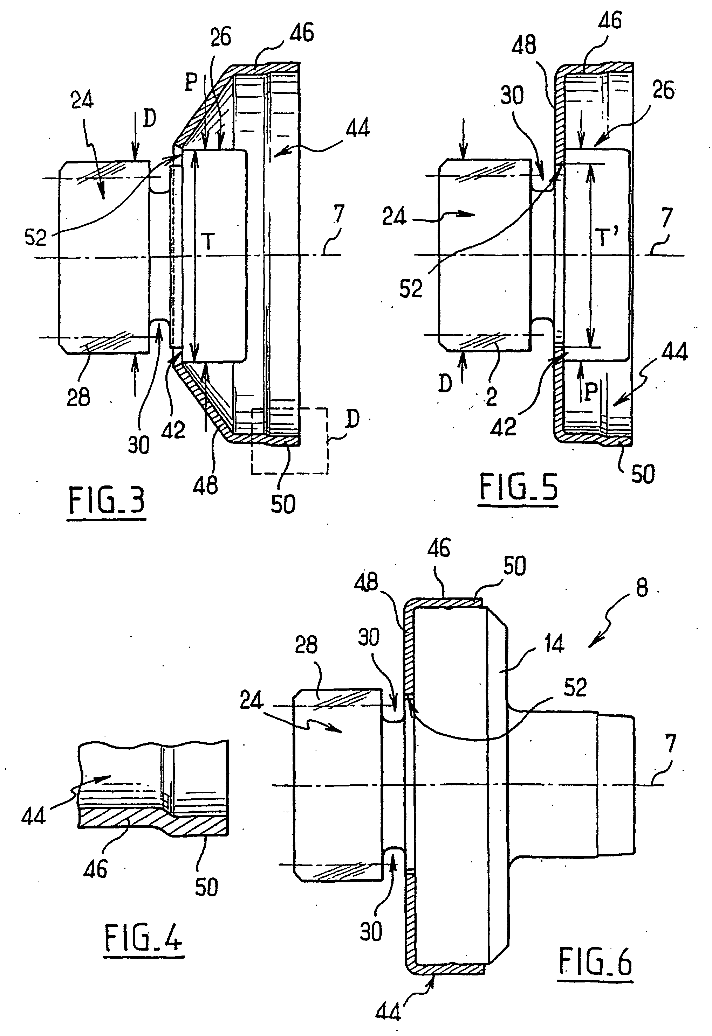

On va décrire, en référence aux figures 3 à 6, un mode préféré de réalisation du démarreur selon l'invention et son assemblage au moyen du procédé de l'invention.

Mis à part le lanceur qui sera décrit plus en détails, le démarreur selon l'invention présente des pièces tout à fait semblables à celles qui ont été décrites en référence au démarreur de l'art antérieur illustré à la figure 1, en particulier un moteur 4, un contacteur 10 pour alimenter le moteur 4 et un levier 12 attelé à un noyau mobile non référencé du contacteur. Le lanceur 8 du démarreur selon l'invention comprend un boîtier 14 semblable à celui du lanceur de l'art antérieur illustré à la figure 2. Ce boîtier est solidaire d'une partie tubulaire en prise avec des cannelures de l'arbre 6 du moteur, afin de présenter les fonctionnalités qui ont été précédemment décrites.

Pour fabriquer le lanceur du démarreur selon l'invention, on fournit tout d'abord un pignon 24 annulaire en tous points identique au pignon décrit à la figure 2. Ce pignon a une forme générale symétrique de rotation autour de l'axe 7 qui est l'axe du lanceur et de l'arbre 6. Le pignon présente une denture 28 constituée par des dents dont le sommet allongé s'étend parallèlement à l'axe 7. Au niveau de la denture, un plus grand diamètre D du pignon est mesuré au sommet des dents. Le pignon présente par ailleurs une piste 26 pour le roulement des galets 22 de la roue libre constituée par une face cylindrique d'axe 7. Au niveau de la piste, le pignon présente un plus grand diamètre égal au diamètre P de la piste. En l'espèce, le diamètre P de la piste est supérieur à celui D de la denture et constitue le plus grand diamètre du pignon. Bien entendu en variante, cela peut être l'inverse. En variante, les diamètres sont égaux. Ainsi le diamètre D de la denture peut être supérieur au diamètre P de la piste. C'est surtout lorsque D est très supérieur à P que l'invention devient particulièrement intéressante d'un point de vue économique et process de fabrication.

Entre la denture et la piste, le pignon présente un décrochement constitué par un épaulement présentant un flanc 42 contigu à la piste. Ce flanc est défini par une face annulaire perpendiculaire à l'axe 7. Cet épaulement présente donc un diamètre moyen inférieur à celui P de la piste. Le pignon présente une gorge 30 à profil en U de forme annulaire s'étendant entre l'épaulement 42 et la denture 28.

Le lanceur selon l'invention comporte un capot 44 annulaire constitué en espèce par une collerette 46 de forme essentiellement cylindrique et une paroi 48 axialement saillante de forme généralement tronconique contiguë à la collerette 46 par son plus grand diamètre. Comme illustré notamment à la figure 4, la collerette présente un tronçon 46 contigu à la paroi 48, ainsi qu'un tronçon d'extrémité libre 50. Ce tronçon 50 présente un diamètre intérieur légèrement plus grand que le diamètre intérieur de l'autre tronçon 46 de la collerette. Les deux tronçons ont chacun une forme généralement cylindrique. L'ensemble du capot a une forme symétrique de révolution d'axe 7.

La paroi tronconique 48 du capot définit à sa section de plus petit diamètre une ouverture circulaire centrale 52 de diamètre T.
Le diamètre T est supérieur au diamètre du fond de la gorge 30 annulaire délimitée ici par deux flancs perpendiculaires à l'axe 7. Le fond de la gorge est de forme cylindrique. L'un des flancs de la gorge 30 délimite axialement la denture 28, tandis que l'autre flanc est contigu à un tronçon (non référencé) cylindrique se raccordant à l'épaulement 42. La longueur axiale de ce tronçon est ici égale à l'épaisseur du capot 44. Le diamètre de ce tronçon est inférieur au diamètre T.
En espèce, le capot est fourni de sorte que le diamètre T est légèrement supérieur au diamètre P de la piste et supérieur au diamètre D de la denture, lequel est lui-même inférieur au diamètre P.

De préférence, on réalise le capot 44 en une matière facilement déformable, telle que de l'acier doux d'emboutissage. De plus, la paroi tronconique 48 reçoit avantageusement un traitement pour réduire l'usure due au frottement de la roue libre et du pignon. Ce traitement peut consister en un durcissement, comme par exemple une trempe. On peut aussi rapporter sur cette paroi une couche organique ou métallique connue en soi pour ses propriétés de résistance à l'usure. Ce traitement concernera au moins la zone de la paroi 48 destinée à s'étendre en regard de la roue libre et de la piste du pignon, qui est soumise au frottement

Comme illustré à la figure 3, le pignon 24 et le capot 44 étant fournis, on engage le pignon dans l'ouverture 52 du capot en faisant pénétrer la piste à travers cette ouverture. On place l'ouverture 52 au droit de l'épaulement ou flanc 42.

En référence à la figure 4, on déforme ensuite le capot engagé sur le pignon de façon à redresser de manière simple et aisée la paroi 48 et à la faire passer d'une forme tronconique à une forme plane perpendiculaire à l'axe 7. De la sorte, l'ouverture 52 se trouve emprisonnée dans l'épaulement 42. Précisément, ce redressement entraîne une réduction du diamètre T de l'ouverture 52 qui devient un diamètre T' inférieur au diamètre P de la piste et ici inférieur en l'espèce au diamètre D de la denture. Lorsque la paroi 48 est positionnée au droit de l'épaulement 42, cette paroi est donc bloquée à translation suivant l'axe 7 à l'encontre de son mouvement en direction de la piste, c'est-à-dire vers la droite sur la figure 5. On notera que, dans le présent mode de réalisation, cette paroi est également bloquée à l'encontre de son coulissement en sens opposé, à savoir par dessus la denture suivant la direction axiale 7.

On assemble par ailleurs les composants nécessaires à la réalisation de la roue libre, à savoir le boîtier 14 ainsi que les galets 22, les ressorts et la graisse nécessaires. Ensuite, en référence à la figure 6, on rapporte le capot assemblé au pignon sur le boîtier 14 de façon à emmancher le capot sur le boîtier, ce dernier pénétrant dans le capot, autour de la piste. Les galets 22 viennent donc en appui sur la piste comme illustré à la figure 2. Le diamètre élargi du tronçon d'extrémité 50 de la collerette du capot facilite le centrage relatif du capot et du boîtier lors de cet emmanchement. Une fois cet assemblage effectué, la collerette s'étend en périphérie de la circonférence du boîtier dont elle recouvre l'intégralité de la face externe cylindrique.

Dans le lanceur de la figure 6, sachant que le lanceur est dépourvu de joint et de rondelle, la paroi 48 du capot est contiguë à une face des galets orientée vers la denture et s'étend en regard de cette face. De même, la paroi 48 est contiguë à une face du boîtier orientée vers la denture et s'étend en regard de cette face.

On procède ensuite à la fixation définitive et rigide du capot sur le boîtier par l'un quelconque parmi les différents moyens connus tels que le sertissage du capot en partie arrière du boîtier tel qu'illustré à la figure 2, la réalisation d'une gorge de renfort, le soudage, etc.

Le procédé selon l'invention permet donc d'obtenir le lanceur illustré à la figure 6, dans lequel le capot 44 est maintenant constitué par une collerette 46 de forme générale cylindrique recouvrant le boîtier en périphérie, et une paroi 48 de forme plane perpendiculaire à l'axe 7 et présentant une ouverture 52 en son centre. La paroi s'étend au droit de l'épaulement 48 du pignon, elle laisse libre et dégagée la gorge 30 et s'étend à distance de la denture. Elle bloque le capot à coulissement axial en direction de la piste.

On procède ensuite au montage du lanceur dans le démarreur de façon connue en soi.

Dans le démarreur selon l'invention, le nombre de pièces nécessaires à. la fabrication est donc réduit, ainsi que le nombre d'étapes d'assemblage. Le procédé d'assemblage se trouve simplifié. Il s'ensuit une réduction du prix de revient du démarreur. Par ailleurs, la possibilité de déformer le capot après engagement sur le pignon permet de dimensionner la denture du pignon avec plus d'indépendance par rapport au capot. Le lanceur pourra donc plus facilement avoir une denture de grand diamètre.

Le lanceur selon l'invention sera de préférence dépourvu de joint d'étanchéité, sachant que l'étanchéité de la roue libre sera assurée par la fixation du capot sur le boîtier. De plus, le capot remplit la fonction des deux demi rondelles précédemment connues. La disparition du joint et des demi rondelles permet de réduire l'encombrement axial du lanceur.

Bien entendu, on pourra apporter à l'invention de nombreuses modifications sans sortir du cadre de celle-ci.

En particulier la paroi 48 tronconique peut s'étendre sur une plus faible hauteur et donc se raccorder à une paroi plane contiguë à la collerette 48 par son plus grand diamètre. D'une manière générale le lanceur présente à sa périphérie interne une portion axialement saillante, telle qu'une portion inclinée ou une portion bombée, déformable et délimitant une ouverture ayant un diamètre supérieur au plus grand diamètre de la piste. Cette portion saillante est redressée par la suite pour diminuer le diamètre de l'ouverture.

Grâce à l'invention, le diamètre P peut être inférieur, égal ou supérieur au diamètre D. On notera que l'extrémité libre de la piste 26 est chanfreinée pour favoriser l'engagement du capot 44 sur la piste 26. On appréciera que la gorge 30 autorise la déformation de la portion inclinée 48 réalisée lors de l'étape d'engagement.
Cette gorge peut avoir en variante une autre forme.

D'une manière générale il est prévu un dégagement entre la piste 26 et la denture 28 pour faciliter la déformation de la portion inclinée 48.

## Revendications

1. Procédé de fabrication d'un démarreur (2) pour véhicule, comprenant une étape consistant à :
- fournir un pignon (24) de lanceur présentant un flanc (42) et une piste (26) pour le roulement de galets (22);
**caractérisé en ce qu'**il comprend les étapes supplémentaires consistant à :
- fournir un capot (44) de lanceur (8) présentant à sa périphérie interne une portion axialement saillante (48) délimitant une ouverture (52) ayant un diamètre (T) supérieur à un plus grand diamètre (P)) de la piste (26);
- engager le capot (44) sur la piste (26) du pignon (24) et déformer la portion saillante (48) du capot (44) pour réduire le diamètre de son ouverture de sorte que le flanc 542° s'étend entre l'ouverture (52) et la piste (26) et bloque le capot en direction de la piste ; et
- fixer le capot (44) à un boîtier (14) de lanceur, de sorte qu'il recouvre le boîtier en périphérie au moins partiellement.

2. Procédé selon la revendication 1, **caractérisé en ce que** durant l'étape d'engagement, on déforme le capot (44) pour réduire le diamètre (T) de son ouverture (52).

3. Procédé selon la revendication 1 ou 2, **caractérisé en ce qu'**on fournit le capot (44), de sorte qu'il comprend une paroi (48) de forme tronconique définissant l'ouverture (52).

4. Procédé selon la revendications 1, **caractérisé en ce que**, le capot présentant une paroi (48) définissant l'ouverture (52), on traite cette paroi pour augmenter sa dureté.

5. Procédé selon la revendication 1 , **caractérisé en ce que**, le capot (44) présentant une paroi (48) définissant l'ouverture (52), on rapporte sur cette paroi une couche d'un matériau protecteur.

6. Procédé selon la revendication 1, **caractérisé en ce que** l'on emmanche le boîtier (14) dans une collerette (46) du capot (44).

7. Procédé selon la revendication 6, **caractérisé en ce que** la collerette (46) présente un tronçon d'extrémité (50) de diamètre supérieur à un diamètre d'un autre tronçon (46) de la collerette contigu au tronçon d'extrémité.

## Patentansprüche

1. Verfahren zur Herstellung eines Anlassers (2) für Fahrzeuge, das einen Arbeitsgang umfaßt, der darin besteht:
- ein Ritzel (24) einer Einspurvorrichtung bereitzustellen, das eine Flanke (42) und eine Laufbahn (26) für Rollen aufweist;
**dadurch gekennzeichnet, daß** es die zusätzlichen Arbeitsgänge umfaßt, die darin bestehen:
- eine Abdeckkappe (44) für die Einspurvorrichtung (8) bereitzustellen, die an ihrem inneren Umfang einen axial vorstehenden Abschnitt (48) aufweist, der eine Öffnung (52) mit einem Durchmesser (T) begrenzt, der größer als ein größter Durchmesser (P) der Laufbahn (26) ist;
- die Abdeckkappe (44) auf der Laufbahn (26) des Ritzels (24) einzusetzen und den vorstehenden Abschnitt (48) der Abdeckkappe (44) zu verformen, um den Durchmesser ihrer Öffnung zu verringern, so daß sich die Flanke (42) zwischen der Öffnung (52) und der Laufbahn (26) erstreckt und die Abdeckkappe in Richtung der Laufbahn blockiert; und
- die Abdeckkappe (44) an einem Gehäuse (14) der Einspurvorrichtung zu befestigen, so daß sie das Gehäuse am Umfang zumindest teilweise bedeckt.

2. Verfahren nach Anspruch 1, **dadurch gekennzeichnet, daß** während des Einsetzvorgangs die Abdeckkappe (44) verformt wird, um den Durchmesser (T) ihrer Öffnung (52) zu verringern.

3. Verfahren nach Anspruch 1 oder 2, **dadurch gekennzeichnet, daß** die Abdeckkappe (44) so bereitgestellt wird, daß sie eine die Öffnung (52) definierende kegelstumpfförmige Wand (48) aufweist.

4. Verfahren nach Anspruch 1, **dadurch gekennzeichnet, daß**, insoweit die Abdeckkappe eine die Öffnung (52) definierende (48) Wand aufweist, diese Wand behandelt wird, um ihre Härte zu erhöhen.

5. Verfahren nach Anspruch 1, **dadurch gekennzeichnet, daß**, insoweit die Abdeckkappe (44) eine die Öffnung (52) definierende Wand (48) aufweist, auf dieser Wand eine Schicht eines Schutzmaterials aufgebracht wird.

6. Verfahren nach Anspruch 1, **dadurch gekennzeichnet, daß** das Gehäuse (14) in einen Kragen (46) der Abdeckkappe (44) eingesteckt wird.

7. Verfahren nach Anspruch 6, **dadurch gekennzeichnet, daß** der Kragen (46) ein Abschlußteilstück (50) mit einem Durchmesser aufweist, der größer als der Durchmesser eines an das Abschlußteilstück angrenzenden anderen Teilstücks (46) des Kragens ist.

## Claims

1. A method of making a starter (2) for a vehicle, including a step which consists in providing a starter head pinion (24) having a flank (42) and a track (26) for rolling motion of rollers (22) thereon,
**characterised in that** it includes the additional steps which consist of:
- providing a shroud (44) of the starter head (8), having at its inner periphery an axially projecting portion (48) which defines an aperture (52), the diameter (T) of which is greater than a larger diameter (P) of the track (26);
- engaging a shroud (44) on the track (26) of the pinion (24), and deforming the projecting portion (48) of the shroud (44) whereby to reduce the diameter of its aperture, in such a way that the flank (42) extends between the aperture (52) and the track (26) and prevents movement of the shroud towards the track; and
- fixing the shroud (44) to a starter head housing (14), so that it at least partially overlies the housing at its periphery.

2. A method according to Claim 1, **characterised in that**, during the engagement step, the shroud (44) is so configured as to reduce the diameter (T) of its aperture (52).

3. A method according to Claim 1 or Claim 2, **characterised in that** the shroud (44) is so formed that it includes a frusto-conical wall (48) which defines the aperture (52).

4. A method according to Claim 1, **characterised in that**, the shroud having a wall (48) which defines the aperture (52), the said wall is treated to increase its hardness.

5. A method according to Claim 1, **characterised in that**, the shroud (44) having a wall (48) which defines the aperture (52), a layer of a protective material is applied on the said wall.

6. A method according to Claim 1, **characterised in that** the housing (14) is force-fitted into a collar portion (46) of the shroud (44).

7. A method according to Claim 6, **characterised in that** the collar portion (46) has an end portion (44), the diameter of which is greater than a diameter of a further portion (46) of the collar portion which is contiguous with the end portion.
